# EUROPÄISCHE PATENTANMELDUNG

(11) **EP 0 939 539 A1**
(43) Veröffentlichungstag der Anmeldung: **01.09.1999**
(21) Anmeldenummer: 98103401.0
(22) Anmeldetag: 26.02.1998
(51) Int. Cl.: H04M 15/00

(54) **Verfahren und Tarifierung in einem Kommunikations-Netz**

(71) Anmelder: SIEMENS AKTIENGESELLSCHAFT, 80333 München (DE)
(72) Erfinder: Bischoff, Mathias, Dr.Ing., 81375 München (DE); Lautenbacher, Markus, Dr.rer.nat., 82487 Oberammergau (DE)

(57) **Zusammenfassung**

Der Erfindung liegt die Aufgabe zugrunde, eine automatische Anpassung der Telekommunikationsdienst-Tarife an die momentanen Verkehrsverhältnisse im Netz zu ermöglichen. Diese Aufgabe wird dadurch gelöst, daß den Netzknoten periodisch die netzzentral ermittelte Verkehrslast mitgeteilt wird, anhand derer die Netzknoten jeweils einen aktuellen Tarif ermitteln und diesen ermittelten Tarif zum Zwecke der Erfassung der Dienstnutzungs-relevanten Daten aufzeichnen.

## Beschreibung

Nach dem heutigen Stand der Technik variieren Tarife für die Inanspruchnahme von Telekommunikationsdiensten nach einem zeitlichen Schema, welches durch den Betreiber vorgegeben wird und seine Erwartung hinsichtlich der Auslastung seines Netzes widerspiegelt. Die tatsächliche Auslastung des Netzes kann sich jedoch signifikant von der erwarteten unterscheiden. Der Tarif spiegelt dann die aktuelle Netzauslastung nicht wieder.

Der Erfindung liegt die Aufgabe zugrunde, eine automatische Anpassung der Tarife für die Nutzung von Telekommunikationsdiensten an die momentanen Verkehrsverhältnisse im Netz zu ermöglichen.

Diese Aufgabe wird durch ein Verfahren gemäß Anspruch 1 gelöst.

Vorteile für Benutzer von Telekommunikationsdiensten und Betreiber der entsprechenden Netze:
Der Benutzer ist in der Lage sein Telekommunikationsverhalten den schwankenden Tarifen anzupassen, die sich ihrerseits an die jeweilige Nachfrage adaptieren. Das Wechselspiel von Angebot und Nachfrage wird zu einer gleichmäßigeren Netzauslastung führen und dem preisbewußten Kunden die Möglichkeit eröffnen, die Inanspruchnahme eines Dienstes zu einem Zeitpunkt günstiger Tarife zu tätigen. Die gleichmäßigere Netzauslastung erlaubt dem Betreiber, auf die Installation von Reservekapazitäten, die nur zur Deckung der Nachfrage während seltener Lastspitzen benötigt werden, zu verzichten und sein Netz damit wirtschaftlicher zu betreiben.

Im folgenden wird die Erfindung mithilfe der Zeichnung näher erläutert, wobei die Zeichnung eine Figur umfaßt.

In der Figur ist die prinzipielle Anordnung zum Realisieren des unter 1. beschriebenen Leistungsmerkmals dargestellt:

In einem Telekommunikationsnetz 1 wird periodisch die Verkehrslast mit Hilfe einer zentralen Erfassungseinrichtung 11 gemessen. In der Praxis üblich sind Messungen in Abständen der Größenordnung von 5 Sekunden.

Der von der Verkehrserfassungseinrichtung 11 ermittelte aktuelle Lastwert wird an eine Datenverarbeitungsanlage 12 weitergeleitet. Diese berechnet daraus mit Hilfe eines durch den Betreiber des Telekommunikationsnetzes 1 vorgegebenen Algorithmus eine Lastkennzahl. Diese Lastkennzahl reflektiert den Grad der Netzauslastung und dient als lastabhängiger Proportionalitätsfaktor für die Berechnung der Tarife.

Die Lastkennzahl wird mittels eines Datennetzes 13 periodisch an sämtliche Vermittlungseinrichtungen 20 mit angeschlossenen Teilnehmern weitergeleitet.

Da der Tarif für die Inanspruchnahme eines Dienstes vorab bekannt sein muß, bedarf es dabei gegenüber dem heutigen Stand der Technik einer Möglichkeit dem potentiellen Benutzer den aktuell gültigen Tarif mitzuteilen. Die Vermittlungseinrichtung 20 ist deshalb gegenüber dem heutigen Stand der Technik um eine Ausgabevorrichtungssteuerung 21 erweitert, die die hierzu erforderlichen Signale erzeugt. Die Art der Signale ist dabei abhängig vom Teilnehmerendgerät und vom Dienst und kann beispielsweise Schwingungen im Hörfrequenzbereich, Meldungen in Signalisierkanälen oder IP-Datagramme umfassen.

Außerdem ist die in 20 nach dem heutigen Stand der Technik enthaltene Vorrichtung zur Dienstenutzungserfassung 22, die beispielsweise als Prozeß im Gruppenprozessor einer Anschlußgruppe realisiert ist und Dienstnutzungs-relevante Daten (z.B. Ursprungs- und Zielrufnummer, Verbindungs-Dauer für den Dienst, Zeitpunkt des Verbindungsaufbaus bzw. Verbindungsabbaus) erfasst, dahingehend modifiziert, daß sie nunmehr benutzerspezifische, zeitlich variable Tarifierungsfaktoren miterfaßt, wodurch eine zeitlich variable Bewertung der Nutzungsdauer des Dienstes ermöglicht wird.

Der Tarifierungsfaktor wird durch ein benutzerinitiiertes Ereignis vor bzw. während des Verbindungsaufbaus (Beispiele: Abnahme des Hörers durch A-Teilnehmer, Wählbeginn) durch die zu diesem Zeitpunkt gültigen Lastkennzahl festgelegt und bleibt dann für eine bekannte und durch den Betreiber wählbare Zeitspanne konstant. Nach Ablauf dieser Zeitspanne wird der Tarifierungsfaktor erneut durch die dann gültige Lastkennzahl festgelegt. Die Zeitspanne, während der der Tarifierungsfaktor konstant bleibt, liegt vorteilhafterweise in der Größenordnung der typischen Dienstenutzungsdauer. Die solchermaßen ermittelten Tarifierungsfaktoren einer Verbindung werden als Dienstnutzungs-relevante Daten abgespeichert.

Das Teilnehmerendgerät 30 verfügt über eine Ausgabevorrichtung 31 zur Ausgabe des jeweils für den Benutzer gültigen Tarifs für die Dienstenutzung. Die Art und Häufigkeit der Ausgabe ist dabei abhängig vom Teilnehmerendgerät und vom Dienst. Nähere Erläuterungen sind bei der Beschreibung der Ausführungsbeispiele angegeben. Die Ausgabevorrichtung 31 dient weiterhin zur Information des Benutzers falls sich der neu ermittelte vom bisher gültigen Tarifierungsfaktor unterscheidet. Diese Information muß vor der tatsächlichen Tarifänderung erfolgen, damit der Teilnehmer die Möglichkeit hat den Dienst zu terminieren.

Die durch die Ausgabevorrichtung 31 ausgegebene Information wird ihr mittels der Ausgabevorrichtungssteuerung 21 zugeleitet. Die Steuerung 21 ist dabei mit der Vorrichtung zur Dienstenutzungserfassung 22 synchronisiert, damit gewährleistet ist, daß der ausgegebene und der dem Kunden in Rechnung gestellte Tarif konsistent ist.

Durch die Erfindung wird ein vollkommen neues Leistungsmerkmal für Telekommunikationsnetze realisiert, nämlich das Leistungsmerkmal der lastabhängigen Tarifierung.

Als erstes Ausführungsbeispiel wird die Erfindung auf den Dienst 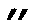 Telephonie im Festnetz" angewandt:

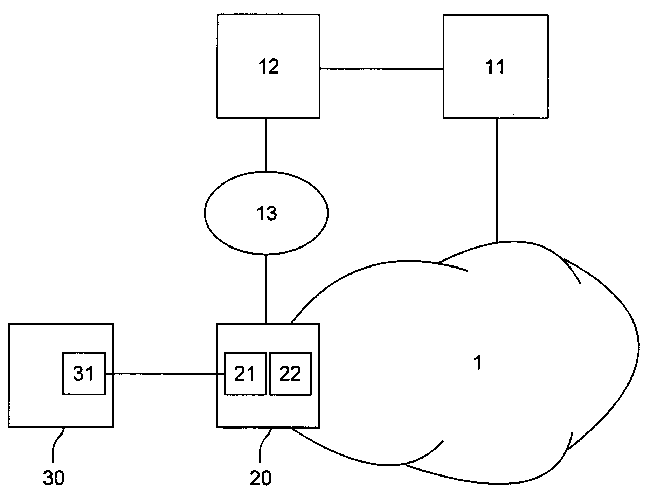

Bei dem Telekommunikationsnetz 1 aus Fig. 1 handelt es sich in diesem Ausführungsbeispiel um das Netz zur Telephonie mit fest installierten Endgeräten 30 nach dem heutigen Stand der Technik. Die Vermittlungseinrichtung 20 ist realisiert durch die jeweilige Ortsvermittlung über die der Benutzer an das Gesamtnetz 1 angeschlossen ist. Die Ausgabervorrichtungssteuerung 21 wird realisiert durch die nach dem heutigen Stand der Technik verfügbaren Resourcen zur Sprachansage in Telephonienetzen (z.B. Service Node, Resource Platform). Die Ausgabevorrichtung 31 wird direkt mittels des bereits vorhandenen Telephonapparates des Benutzers realisiert. Beim Verbindungsaufbau (Beispiel: Wählbeginn, Abnahme des Hörers durch A-Teilnehmer) gibt die Vorrichtung zur Dienstenutzungserfassung 22 über die Ausgabervorrichtungssteuerung 21 dem Benutzer den momentan gültigen Tarif durch Sprachansage bekannt. Während des Gesprächs bleibt der Tarif für eine garantierte Dauer konstant. Ändert sich der Tarif nach dieser Zeit auf Grund eines Lastanstiegs um mehr als einen durch den Betreiber einstellbaren Schwellenwert (z.B. 10%), so wird dies dem Benutzer durch Einblendung entsprechender aktustischer Signale in den Sprachkanal signalisiert.

Eine mögliche Signalisierung der Tarifänderung nach Betrag und Richtung mittels akustischer Signale ist:

Der Betrag der Tarifänderung wird angezeigt durch die Signalanzahl:
- einzelner Signalton: 10-20%-ige Tarifänderung
- zweifacher Signalton: 20-30%-ige Tarifänderung
- dreifacher Signalton: >30%-ige Tarifänderung
Die Richtung der Tarifänderung wird angezeigt durch die Signallänge:
- kurzer Signalton: Tarifabnahme
- langer Signalton: Tarifanstieg
Die Anzeige von Betrag und Richtung der Tarifänderung erlaubt dem Benutzer bei sich ändernden Tarifen die Dienstenutzung auf Grund steigender bzw. fallender Kosten abzubrechen bzw. auszudehnen.

Als weitere Variante dieses Ausführungsbeispiels kann bei ISDN-fähigen Telephonendgeräten mit Rufnummernanzeige diese Teil der Ausgabevorrichtung 31 sein. Die Ausgabervorrichtungssteuerung 21 in der Vermittlungseinrichtung 20 nutzt in diesem Fall die im ISDN Protokol z.B. zur Rufnummernanzeige ohnehin schon existierenden Mechanismen, um den Benutzer lastabängige Tarifänderungen optisch mitzuteilen.

Als zweites Ausführungsbeispiel wird die Erfindung auf den Dienst 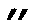 Telephonie im Mobilnetz" angewandt:

Bei dem Telekommunikationsnetz 1 aus Fig. 1 handelt es sich in diesem Ausführungsbeispiel um das Netz zur Mobiltelephonie mit beweglichen Endgeräten 30 nach dem heutigen Stand der Technik. Die Vermittlungseinrichtung 20 ist realisiert durch das jeweilige Mobile Switching Center, über das der Benutzer momentan an das Gesamtnetz 1 angebunden ist. Die Ausgabervorrichtungssteuerung 21 wird realisiert durch die nach dem heutigen Stand der Technik verfügbaren Resourcen zur Anzeige von Rufnummern bzw. Kurzmitteilungen in Mobiltelephonienetzen (z.B. Service Node, Resource Platform). Die Ausgabevorrichtung 31 wird direkt mittels der im Mobiltelephon des Benutzers bereits vorhandenen optischen Anzeige realisiert.

Mit Mitteln analog zum Ausführungsbeispiel für das Festnetz ist auch für das Mobilnetz eine akustische Anzeige der Tarifänderung technisch möglich, jedoch für den Benutzer weniger attraktiv als die im Fall des Mobilnetz allgemein realisierbare optische Variante.

Als drittes Ausführungsbeispiel wird die Erfindung auf den Dienst 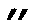 Internet-Zugang durch Einwahl mittels Modem oder ISDN-Karte über das Telefonnetz in den Point of Presence (POP) eines Internet Service Providers (ISP)" angewandt.

Bei dem Telekommunikationsnetz 1 aus Fig. 1 handelt es sich in diesem Ausführungsbeispiel um das Netz zur Telephonie mit fest installierten Endgeräten 30 (Computer mit an das Festnetz angeschlossenem Modem oder ISDN-Karte) nach dem heutigen Stand der Technik. Die Vermittlungseinrichtung 20 ist realisiert durch die jeweilige Ortsvermittlung über die der Benutzer an das Gesamtnetz 1 angeschlossen ist. Die Ausgabe des gültigen Tarifs für die Nutzung der Telephonverbindung zwecks Einwahl zum POP wird nach dem Client-Server Prinzip realisiert. Die Ausgabervorrichtungssteuerung 21 wird realisiert als Server Applikation, die innerhalb der Vermittlungseinrichtung 20 abläuft. Die Ausgabevorrichtung 31 wird realisiert als Client Applikation auf dem Computer des Benutzers.

Nach dem Verbindungsaufbau zum POP und erfolgreicher Anmeldung wird am Ende der Einwahl automatisch die Client Applikation auf dem Computer des Benutzers gestartet. Der Client ermittelt anschließend durch ein erstmaliges Polling der Server Applikation den momentan gültigen Tarif sowie eine Zeitkonstante für eine applikationsinterne Timerfunktion nach deren Ablauf jeweils periodisch ein erneutes Tarif-Polling durchgeführt wird. Nach Abschluß jedes Polling-Vorgangs wird der so ermittelte, aktuelle Tarif auf dem Computerbildschirm zur Anzeige gebracht (z.B. in einem eigenen Tarifanzeige-Fenster bei geeigneter graphischer Benutzeroberfläche). Bei Tarifänderungen über einem vom Benutzer einstellbaren Schwellenwert wird zusätzlich wahlweise eine akustische bzw. optische Warnung für den Benutzer ausgeben.

## Patentansprüche

1. Verfahren zur Tarifierung in einem Kommunikations-Netz, demgemäß
- mithilfe einer zentralen Erfassungseinrichtung periodisch die Verkehrslast gemessen wird,
- anhand der genannten mindestens einen Verkehrslast-Messung periodisch eine Lastkennzahl ermittelt und an die Netzknoten übermittelt wird,
- in einem jeweilgen Netzknoten der Tarif für einen zur Durchführung eines Dienstes erforderlichen Call anhand der zu Beginn des Calls gültigen Lastkennzahl ermittelt und dieser ermittelte Tarif zum Zwecke der Erfassung der Dienstnutzungsrelevanten Daten aufgezeichnet wird.

2. Verfahren nach Anspruch 1,
**dadurch gekennzeichnet,** daß
der Tarif während eines Calls nach Ablauf einer bestimmten Zeitspanne erneut durch die dann gültige Lastkennzahl festgelegt und entsprechend aufgezeichnet wird.

3. Verfahren nach Anspruch 2,
**dadurch gekennzeichnet,** daß
die genannte Zeitspanne durch den Betreiber gewählt wird.

4. Verfahren nach einem der Ansprüche 2 oder 3,
**dadurch gekennzeichnet,** daß
die genannte Zeitspanne in der Größenordnung der typischen Dienstenutzungsdauer gewählt wird.

5. Verfahren nach einem der Ansprüche 1 bis 4,
**dadurch gekennzeichnet,** daß
die Lastkennzahl über ein Datennetz an die Netzknoten übermittelt wird.

6. Verfahren nach einem der Ansprüche 1 bis 5,
**dadurch gekennzeichnet,** daß
das Verfahren auf den Dienst Telephonie im Festnetz angewandt wird

7. Verfahren nach einem der Ansprüche 1 bis 5,
**dadurch gekennzeichnet,** daß
das Verfahren auf den Dienst Telephonie im Mobilnetz angewandt wird.

8. Verfahren nach einem der Ansprüche 1 bis 5,
**dadurch gekennzeichnet,** daß
das Verfahren auf den Dienst Internet-Zugang über das Telefonnetz angewandt wird.

9. Verfahren nach einem der Ansprüche 1 bis 8,
**dadurch gekennzeichnet,** daß
der genannte ermittelte Tarif vom Netzknoten auch für die Tarif-Anzeige gegenüber dem Benutzer verwendet wird.

10. Netzknoten, der
ein Verfahren gemäß einem der Ansprüche 1 bis 8 unterstützt, indem er die periodisch ermittelte Lastkennzahl empfängt und daraus den aktuellen Tarif ermittelt, den er aktiven Calls nach Ablauf ihrer jeweiligen Vergebührungsintervalle zuordnet und dem Benutzer gleichzeitig anzeigt.

11. Netzknoten, mit
einer Vorrichtung zur Dienstenutzungserfassung, die Dienstnutzungs-relevante Daten erfasst, wobei sie insbesondere benutzerspezifische, zeitlich variable Tarifierungsfaktoren miterfaßt,
einer Ausgabevorrichtungssteuerung, die Signale zur Weiterleitung an die Ausgabevorrichtung im Teilnehmerendgerät erzeugt, wobei diese Signale die Information über den aktuellen Tarif tragen.

12. Netzknoten nach Anspruch 11,
**dadurch gekennzeichnet,** daß
die Ausgabevorrichtungssteuerung mit der Vorrichtung zur Dienstenutzungserfassung derart synchronisiert ist, daß der dem Kunden angezeigte Tarif mit dem dem Kunden in Rechnung gestellten Tarif übereinstimmt.
